(19) Europäisches Patentamt
European Patent Office
Office européen des brevets

(11) Veröffentlichungsnummer: **0 038 295**
**A1**

# (12) EUROPÄISCHE PATENTANMELDUNG

(21) Anmeldenummer: **81810114.9**

(22) Anmeldetag: **23.03.81**

(51) Int. Cl.³: **C 08 L 63/00**, D 06 M 15/00, D 21 H 3/36, C 08 L 25/06, C 08 L 25/14, C 08 L 33/20

(30) Priorität: **28.03.80 CH 2490/80**

(43) Veröffentlichungstag der Anmeldung: **21.10.81**
**Patentblatt 81/42**

(84) Benannte Vertragsstaaten: **BE CH DE FR GB IT LI NL SE**

(71) Anmelder: **CIBA-GEIGY AG, Patentabteilung Postfach, CH-4002 Basel (CH)**

(72) Erfinder: **Töpfl, Rosemarie, Dorneckstrasse 68, CH-4143 Dornach (CH)**

## (54) Komponentengemische aus Epoxyd-Polyalkylenpolyaminoamid-Umsetzungsprodukten und aus Polymerisaten auf Acrylbasis und/oder Styrol, deren Herstellung und Verwendung als Papierleimungs- und Textilbehandlungsmittel.

(57) Neue, als Papierleimungs- und Textilbehandlungsmittel verwendbare Komponentengemische von

(A) Umsetzungsprodukten aus
- (a) 1,0 Epoxygruppenäquivalent eines Diglycidyläthers,
- (b) 0,2 bis 5,0 Aminogruppenäquivalent eines Polyalkylenpolyaminoamides aus
  - (b') einer polymerisierten, ungesättigten Fettsäure und
  - (b'') einem aliphatischen Polyalkylenpolyamin,
- (c) 0 bis 0,6 Aminogruppenäquivalent eines primären Fettamins und
- (d) 0 bis 1,0 Mol eines Epihalogenhydrins, wobei diese Umsetzungsprodukte durch Säurezusatz in die Salzform übergeführt sind,

und

(B) einem Homopolymerisat aus Styrol oder einem Copolymerisat aus Styrol oder Acrylnitril und einem Alkylester der Acryl- oder Methacrylsäure.

EP 0 038 295 A1

0038295

CIBA-GEIGY AG
Basel (Schweiz)

1-12785/+

Komponentengemische aus Epoxyd- Polyalkylenpolyaminoamid-Umsetzungsprodukten und aus Polymerisaten auf Acrylbasis und/oder Styrol, deren Herstellung und Verwendung als Papierleimungs- und Textilbehandlungsmittel.

Gegenstand der Erfindung sind neue Komponentengemische, die dadurch gekennzeichnet sind, dass sie als Komponente

(A) mindestens ein in Wasser dispergierbares oder lösliches Salz eines Umsetzungsproduktes, wobei dieses Salz durch Umsetzung von

(a) 1,0 Epoxygruppenäquivalent eines Diglycidyläthers des 2,2-Bis-(4'-hydroxyphenyl)-propans,

(b) 0,2 bis 5,0 Aminogruppenäquivalenten eines Polyalkylenpolyaminoamides aus

(b') einer polymerisierten, ungesättigten Fettsäure, die sich von Fettsäuren mit 12 bis 24 Kohlenstoffatomen ableitet, und

(b") einem aliphatischen Polyalkylenpolyamin mit 4 bis 12 Kohlenstoffatomen,

(c) 0 bis 0,6 Aminogruppenäquivalent mindestens eines primären Fettamines mit 12 bis 24 Kohlenstoffatomen,

wobei bei Abwesenheit der Komponente (c) 1,0 bis 5,0 Aminogruppenäquivalent der Komponente (b) und beim Einsatz

der Komponente (c) 0,5 bis 2,0 Aminogruppenäquivalente der Komponente (b) eingesetzt werden,

und

(d) 0 bis 1,0 Mol eines Epihalogenhydrins, in Gegenwart eines inerten, organischen Lösungsmittels bei Temperaturen bis zu 110°C hergestellt wird und wobei dafür gesorgt wird, dass durch einen Säurezusatz spätestens nach Beendigung der Umsetzungen eine mit Wasser auf 10 bis 40 Gewichtsprozent verdünnte Probe des Reaktionsgemisches unter Salzbildung einen pH-Wert von 2 bis 8 aufweist,

und als Komponente

(B) ein Homopolymerisat aus Styrol oder ein Copolymerisat aus Styrol oder Acrylnitril und einem Alkylester der Acryl- oder Methacrylsäure mit 4 bis 12 Kohlenstoffatomen im Alkylrest enthalten.

Weitere Gegenstände der Erfindung sind das Herstellungsverfahren der Komponentengemische aus den angegebenen Umsetzungsproduktsalzen (A) der Komponenten (a), (b), und gegebenenfalls (c) und (d) und aus den Homo- oder Copolymerisaten (B), die Verwendung der Komponentengemische als Papierleimungs- und Textilbehandlungsmittel, ein Verfahren zur Behandlung von Textilmaterialien und zur Oberflächenleimung von Papier unter Einsatz der Komponentengemische und die nach diesen Verfahren geleimten Papiere oder behandelten Textilmaterialien.

Die erfindungsgemässen Komponentengemische enthalten vorzugsweise Umsetzungsproduktsalze (A) die aus Diglycidyläthern des 2,2-Bis(4'-hydroxyphenyl)-propans, auch Bisphenol A genannt, als Komponente (a) erhalten werden, welche vorzugsweise einen Epoxydgehalt von 1,8 bis 5,8, insbesondere 5 bis 5,5 Epoxygruppenäquivalenten/kg aufweisen. Besonders bevorzugte Epoxyde dieser Art entsprechen der Formel

(1)

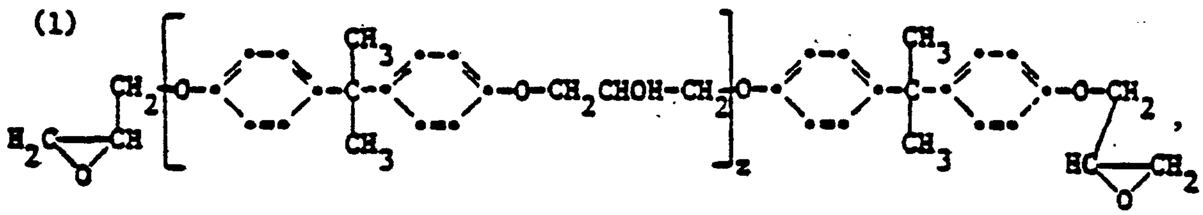

worin z eine Durchschnittszahl im Werte von 0 bis 0,65 bedeutet. Hierbei steht 0 als Wert für z im Vordergrund des Interesses. Solche Epoxyde werden z.B. durch Umsetzung von 2,2-Bis-(4'-hydroxyphenyl)-propan mit Epichlorhydrin oder Bis-halogenhydrinverbindungen und nachfolgender Behandlung mit einer Base erhalten.

Die als Komponente (b') zur Bildung des Polyalkylenpolyaminoamides (b) verwendeten polymerisierten ungesättigten Fettsäuren sind vorzugsweise di- bis trimerisierte Fettsäuren, welche sich von Monocarbonsäuren mit 12 bis 24, vorzugsweise 16 bis 22 und insbesondere 16 bis 18 Kohlenstoffatomen ableiten. Diese Monocarbonsäuren sind Fettsäuren mit mindestens einer, vorzugsweise 2 bis 5 äthylenisch ungesättigten Bindungen. Vertreter dieser Klasse von Säuren sind z.B. Laurolein-, Myristolein-, Pälmitolein-, Physetöl-, Oel-, Elaidin-, Petroselin-, Eikosen-,Cetolein-, Gadolein-, Eruka-, vorzugsweise Eläostoarin-, Parinar-, Arachidon-, Clupanodon-, Nisin- und insbesondere Linol- und Linolensäure. Diese Fettsäuren können aus natürlichen Oelen pflanzlicher oder tierischer Herkunft, worin sie vor allem aus Glyceride vorkommen, gewonnen werden.

Die erfindungsgemäss eingesetzten di- bis trimerisierten Fettsäuren (b') werden in bekannter Weise durch Dimerisation von Monocarbonsäuren der angegebenen Art erhalten. Die sogenannten dimerisierten Fettsäuren stellen technische Gemische dar, welche stets einen Gehalt an trimerisierten und einen kleinen Gehalt an monomeren Säuren aufweisen.

Besonders geeignet als Komponente (b') ist die di- bis trimerisierte Linol- oder Linolensäure. Die technischen Gemische dieser Säuren enthalten in der Regel 75 bis 95 Gewichtsprozent dimerisierter Säure, 4 bis 25 Gewichtsprozent trimerisierter Säure und eine Spur bis 3 Gewichtsprozent monomerer Säure. Das Molverhältnis von dimerisierter zu trimerisierter Säure beträgt demnach etwa 5:1 bis 36:1.

Als Komponente (b") eignen sich vor allem Polyalkylenpolyamine der Formel

(2) $$H_2N-(CH_2-CH_2-NH)_n-CH_2-CH_2-NH_2$$ ,

worin n 1 bis 5, vorzugsweise 1, 2 oder 3 ist, d.h. Diäthylentriamin, Triäthylentetramin oder Tetraäthylenpentamin, wobei dem Triäthylentetramin eine besondere Bedeutung zukommt.

Im Falle von Amingemischen kann man auch einen nicht ganzzahligen Durchschnittswert annehmen, z.B. zwischen 1 und 2. Technische Amingemische der angegebenen Art sind auch bevorzugt.

Als Komponente (b) von besonderem Interesse wird ein Polyalkylenpolyaminoamid aus di- bis trimerisierter Linol- oder Linolensäure und Triäthylentetramin eingesetzt.

Als gut geeignete fakulative Komponenten (c) haben sich vor allem gesättige oder ungesättigte primäre Fettamine mit 12 bis 24, vorzugsweise 16 bis 22, und insbesondere 16 bis 18 Kohlenstoffatomen erwiesen.

Bei den Aminen handelt es sich also z.B. um Lauryl-, Myristyl-, Arachidyl- oder Behenylamin und insbesondere um Palmityl-, Stearyl-oder Oleylamin. Auch Gemische solcher Amine, wie sie als technische Produkte erhältlich sind, kommen vor allem in Betracht.

Polyalkylenpolyaminoamide als Komponente (b) und Monofettamine als fakulative Komponente (c), welche jeweils 3 bis 4 Aminogruppenäquivalente pro kg aufweisen, stehen im Vordergrund des Interesses.

Als Halogenhydrin für die fakultative Komponente (d) kommen vor allem Epibrom- und insbesondere Epichlorhydrin in Betracht.

Die in den erfindungsgemässen Komponentengemischen enthaltenen Umsetzungsprodukte (A) werden vorzugsweise aus den Komponenten (a) und (b) oder (a), (b), (d) und gegebenenfalls (c) hergestellt. Bei den in Abwesenheit der fakultativen Komponente (c) hergestellten Umsetzungsproduktsalzen (A) werden vorzugsweise 1,5 bis 5,0 Aminogruppenäquivalente der Komponente (b) pro Epoxygruppenäquivalent der Komponente (a) eingesetzt. Wird hingegen bei der Herstellung der Umsetzungsproduktsalze (A) die fakultative Komponente (c) mitverwendet, so werden vorzugsweise 0,5 bis 2,0 Aminogruppenäquivalente der Komponente (b) und 0,2 bis 0,5 Aminogruppenäquivalente der Komponente (c) pro Epoxygruppenäquivalent der Komponente (a) eingesetzt. Wird die fakultative Komponente (d) bei der Herstellung der Umsetzungsproduktsalze (A) aus den Komponenten (a) und (b) oder (a), (b) und (c) zusätzlich mitverwendet, so wird 0,1 bis 0,5 Mol der Komponente (d) pro Epoxygruppenäquivalent der Komponente (a) eingesetzt.

Die Reihenfolge, mit welcher die Komponenten (a), (b) und gegebenenfalls (c) und (d) zur Bildung der Umsetzungsproduktsalze (A) miteinander reagiert werden, ist von untergeordneter Bedeutung. In der Regel wird jedoch die Komponente (b) vorgelegt und anschliessend mit der Komponente (a) umgesetzt, sofern keine der fakultativen Komponenten (c) und (d) mitverwendet wird. Wird hingegen die fakultative Komponente (c) mitverwendet, so wird sie vorzugsweise vorgelegt, zuerst mit der Komponente (a) und dann mit der Komponente (b) umgesetzt. Es können aber auch zuerst die Komponenten (a) und (c) zu einem Epoxyd-Fettamin-Umsetzungsprodukt vorkondensiert werden, das mit der Komponente (b) weiter umgesetzt wird. Wird die fakultative Komponente (d) mitverwendet, so wird sie vorzugsweise zuletzt, d.h. nach dem Umsetzen der Komponenten (a), (b) und gegebenenfalls (c) in der angegebenen Reihenfolge, eingesetzt.

Für den zur Einstellung des pH-Wertes auf 2 bis 8 stets benötigten Säurezusatz kommen sowohl anorganische als auch organische Säuren mit höchstens 4 Kohlenstoffatomen in Frage.

Als anorganische Säuren kommen vor allem Salz- oder Salpetersäure, vorzugsweise Phosphorsäuren, insbesondere die Orthophosphorsäure sowie ferner die Sulfaminsäure in Betracht. Als organische Säuren kommen gesättigte Di- oder vorzugsweise Monocarbonsäuren mit höchstens 4 Kohlenstoffatomen wie Oxal-, Malon-, Bernstein-, vorzugsweise Ameisen-, Essig- und Propionsäure in Betracht. Gemische der genannten Säuren können ebenfalls verwendet werden. Den flüchtigen, gesättigten Monocarbonsäuren wie Ameisensäure und insbesondere Essigsäure, kommt eine besondere Bedeutung zu.

Ebenfalls bevorzugt sind Orthophosphor-, Sulfamin- und Oxalsäure, gegebenenfalls in Gegenwart von Ameisen- oder Essigsäure, d.h. Sulfaminsäure für sich allein einerseits oder Phosphorsäure unter nachträglichem Einsatz von Ameisen- oder Essigsäure andererseits. Im Vordergrund des Interesses steht der Einsatz von Ameisen- und insbesondere von Essigsäure für sich allein, wobei Umsetzungsproduktsalze erhalten werden, die bei deren Verdünnung mit Wasser einen bevorzugten pH-Wert von 4 bis 6 aufweisen. Hierbei werden in der Regel homogene Emulsionen der Umsetzungsproduktsalze (A) erhalten, die einen Salzgehalt, berechnet auf Trockensubstanz, von 15 bis 35

Gewichtsprozent aufweisen. Der Säurezusatz erfolgt zweckmässig bereits während der Umsetzung der Komponenten (a), (b) und gegebenenfalls (c) und (d) oder erst nach Beendigung der Umsetzungen.

Das organische Lösungsmittel, in Gegenwart welches die Umsetzungsreaktionen der Komponenten (a), (b) und gegebenenfalls (c) und (d) durchgeführt werden, ist inert, d.h. vermag mit keiner der erwähnten Komponenten zu reagieren.

Als organische Lösungsmittel kommen in erster Linie wasserlösliche organische Lösungsmittel in Betracht, und zwar zweckmässig solche, die mit Wasser beliebig mischbar sind. Als Beispiele seien cycloaliphatische und aliphatische Aether mit 3 oder vorzugsweise 2 Sauerstoffatomen und 2 bis 8, vorzugsweise 4 bis 8 Kohlenwasserstoffatomen wie Dioxan, Aethylenglykolmono-n-butyläther ( = n-Butylglykol), Diäthylenglykolmono-n-butyläther und insbesondere Alkanole mit 1 bis 4 Kohlenstoffatomen, z.B. Isopropanol, Aethanol und Methanol,erwähnt.

Daneben ist es aber auch möglich, die Umsetzungen in Gegenwart von wasserunlöslichen organischen Lösungsmitteln durchzuführen, z.B. in Benzinkohlenwasserstoffen wie Benzin, Petroläther, Benzol oder halogenierten oder mit niederen Alkylgruppen substituierten Benzolen, wie Toluol, Xylol, Chlorbenzol; alicyclischen Verbindungen wie Tetralin oder Cyclohexan; halogenierten Kohlenwasserstoffen mit vorzugsweise 1 oder 2 Kohlenstoffatomen wie Methylenchlorid,Methylenbromid, Chloroform, Tetrachlorkohlenstoff, Aethylenchlorid, Aethylenbromid,s-Tetrachloräthan und vor allem Trichloräthylen oder Perchloräthylen.

In der Regel werden alle Umsetzungen im gleichen Lösungsmittel durchgeführt, wobei Isopropanol im Vordergrund des Interesses steht.

Als bevorzugten Temperaturbereich, bei welchem die Umsetzungen in den erwähnten Lösungsmitteln durchgeführt werden, kommt 20 bis 110, vorzugsweise 40 bis 95 und insbesondere 60 bis 95°C in Betracht.

Die erfindungsgemässen Komponentengemische enthalten als Komponente (B) ein Homo- oder Copolymerisat der angegebenen Art, welches in Gegenwart von Wasser, der Umsetzungsproduktsalze als Komponente (A) und eines Polymerisationskatalysators bei Temperaturen bis zu 95°C, vorzugsweise 60 bis 95°C hergestellt wird.

Die bei Polymerisationsreaktionen üblicherweise verwendeten Katalysatoren wie Azoverbindungen, z.B. Azoisobuttersäurenitril und vor allem Peroxyde, z.B. Dilauroyl-, Dibenzoylperoxyd, vorzugsweise tert.Butylhydroperoxyd und insbesondere Wasserstoffsuperoxyd kommen bei der Herstellung der Polymerisate als Komponente (B) der erfindungsgemässen Komponentengemische in Betracht.

Falls die Komponente (B) Copolymerisate aus Styrol oder Acrylnitril mit einem Alkylester der Methacryl- oder vorzugsweise Acrylsäure sind, so weisen die Alkylester geradkettige oder insbesondere verzweigte Alkylreste mit 4 bis 12, vorzugsweise 4 bis 8 Kohlenstoffatomen wie 2,2-Dimethylpropyl-, vorzugsweise Isobutyl- und insbesondere 2-Aethylhexylreste auf. Solche Copolymerisate weisen ein bevorzugtes Gewichtsverhältnis Styrol oder Acrylnitril: Alkylester der angegebenen Art von 1:0,1 bis 1:2,0, insbesondere von 1:1,2 bis 1:1,8 bei den Copolymerisaten aus Acrylnitril und Alkylestern und von 1:0,2 bis 1:1 bei den Copolymerisaten aus Styrol und Alkylestern auf, wobei die letztgenannten Copolymerisate im Vordergrund des Interesses stehen.

Besonders bevorzugte Komponentengemische enthalten 25 bis 80 Gewichtsprozent der Umsetzungsproduktsalze als Komponente (A) und 20 bis 75 Gewichtsprozent der Homo- oder Copolymerisate der angegebenen Art als Komponente (B), wobei die Summe dieser Mengen an

Komponenten (A) und (B) im Komponentengemisch stets 100 Gewichtsprozent beträgt. Die Komponentengemische liegen in der Regel als homogene, feinteilige, dünnflüssige Emulsionen vor, deren Gehalt, berechnet auf Trockensubstanz, vorzugsweise 10 bis 40 Gewichtsprozent beträgt. Solche Emulsionen zeichnen sich durch ihre hervorragende Lagerstabilität aus und finden als Papierleimungsmittel für die Oberflächenleimung, sowie als Textilbehandlungsmittel Verwendung.

Vor ihrer Verwendung als Papierleimungsmittel werden diese Emulsionen zuerst mit Wasser so verdünnt, dass wässrige Leimflotten entstehen, deren Gehalt, berechnet auf Trockensubstanz, 0,02 bis 1, vorzugsweise 0,02 bis 0,2 Gewichtsprozent beträgt. Bei der Oberflächenleimung wird das Papier mit der verdünnten Leimflotte im allgemeinen bei Raumtemperatur z.B. durch Aufsprühen oder insbesondere durch Foulardieren imprägniert, und anschliessend bei 60 bis 140°C, vorzugsweise 90 bis 110°C während 0,1 bis 10, vorzugsweise 1 bis 6 Minuten getrocknet. Nach dem Trocknen werden Flächenaufträge der Komponentengemische, berechnet auf Trockensubstanz, von 50 bis 150, vorzugsweise 60 bis 120 $mg/m^2$ erhalten.

Mit bereits geringen Mengen an erfindungsgemässen Komponentengemischen können auf Papier sehr gute Leimungseffekte erzielt werden, die aufgrund von positiven Testergebnissen wie Wasseraufnahme nach Cobb und alkalischer Tintenschwimmdauer bestätigt werden. Insbesondere ermöglichen bei der Oberflächenleimung die geringen Flächenaufträge eine rasche Arbeitsweise, so dass bei einer Trocknungstemperatur von z.B. 90 bis 110°C bereits innerhalb etwa 20 bis 40 Sekunden gute Leimungen erzielt werden. Darüber hinaus weisen die erfindungsgemäss verwendeten Umsetzungsproduktsalze eine gute Kompatibilität mit den üblichen, in der Papierindustrie verwendeten Hilfsstoffen wie Farbstoffen, Pigmenten, Bindemitteln wie etwa Stärke, insbesondere kationischen optischen Aufhellern und sonstigen Zusatzstoffen auf. Im weiteren neigen die Umsetzungsproduktsalze nicht zu einer unerwünschten Schaumbildung.

Bei der Behandlung von Textilmaterialien wird eine wässrige Flotte, die vorzugsweise 1 bis 5 Gewichtsprozent des als 10 bis 40 gewichtsprozentigen Emulsion vorliegenden Komponentengemisches enthält, auf die Materialien durch z.B. Besprühen, Eintauchen oder vorzugsweise Foulardieren aufgebracht, worauf die Materialien bei Temperaturen von vorzugsweise unter 100°C, z.B. 70 bis 90°C während etwa 10 bis 30 Minuten getrocknet und anschliessend vorzugsweise nach dem sogenannten Thermofixierverfahren einer Wärmebehandlung bei Temperaturen über 100°C, z.B. 130 bis 190°C während etwa 30 Sekunden bis 10 Minuten, insbesondere 1 bis 5 Minuten unterworfen werden.

Die Textilmaterialien, die in Frage kommen, enthalten synthetische Fasern aus z.B. Viskose, Zellwolle, Kunstseide, Celluloseacetat (21/2- und Triacetat), Acetaten oder Ketalen von Polyvinylalkohol, Acrylnitrilmischpolymerisaten (vorzugsweise mit einem Acrylnitrilanteil von mindestens 50, insbesondere 85 Gewichtsprozent des Mischpolymerisates, zu dessen Herstellung weitere Vinylverbindungen, z.B. Vinylchlorid, Vinylidenchlorid, Methylacrylate, Acrylamid oder Styrolsulfonsäure als Comonomere eingesetzt worden sind), Polyacrylnitril oder Polyester. Auch Gemische dieser Synthesefasern unter sich kommen in Betracht. Zudem können die Textilmaterialien neben den Synthesefasern kleinere Anteile, in der Regel höchstens 30 bis 40 Gewichtsprozent an Fasern natürlicher Herkunft aus z.B. Wolle oder vorzugsweise Cellulose, insbesondere Baumwolle enthalten. Bevorzugt sind indessen Textilmaterialien, die nur aus Synthesefasern bestehen.

Die Textilmaterialien liegen bevorzugt in Form von Geweben oder Gewirken vor, die gegebenenfalls optisch aufgehellt und/oder gefärbt sind. Polyestergewebe, Polyacrylnitrilgewirke und Polyester-Viskose Mischgewebe stehen im Vordergrund des Interesses.

Die erfindungsgemäss behandelten Gewebe zeichnen sich durch gute Antipilling-, Antisnagging- und Schmutzabweisungseffekte aus, wobei die Antipilling- und Antisnaggingeffekte nach mehrfachen Gebrauchswäschen im Haushalt erhalten bleiben, d.h. permanent sind, die Schmutzabweisungseffekte vor allem bei der Trockenanschmutzung zur Geltung kommen und die Nassanschmutzung nicht wesentlich beeinträchtigen.

In den nachfolgenden Beispielen und Herstellungsvorschriften sind die angegebenen Teile und Prozente stets Gewichtseinheiten.

Herstellungsverfahren für die Komponente (A)

A. 56 Teile Talgfettamin (0,2 Aminogruppenäquivalent eines technischen Gemisches aus 50% Palmitylamin, 30% Stearylamin und 40% Oleylamin, das einen Amingehalt von 3,57 Aequivalenten/kg aufweist) werden in 15 Teilen Isopropanol bei 80°C gelöst. In die Fettaminlösung wird eine Lösung aus 75,6 Teilen eines aus 2,2-Bis(4'-hydroxyphenyl)-propan und Epichlorhydrin gebildeten Epoxyds (0,4 Epoxygruppenäquivalent des Epoxydes, das einen Epoxydgehalt von 5,29 Aequivalenten/kg aufweist) in 15 Teilen Isopropanol zugegeben, wobei eine exotherme Reaktion einsetzt. Das Reaktionsgemisch wird während 15 Minuten bei 85°C gehalten und anschliessend mit einer Lösung aus 43 Teilen eines aus dimerisierter Linolsäure und Triäthylentetramin gebildeten Polyäthylenpolyaminoamides (0,2 Aminogruppenäquivalent des Polyaminoamids, das einen Amingehalt von 4,65 Aequivalenten/kg aufweist) in 15 Teilen Isopropanol versetzt. Nach der Polyäthylenpolyaminoamidzugabe wird das Reaktionsgemisch wiederum auf 85°C geheizt, während 2 Stunden bei dieser Temperatur gehalten und anschliessend mit 28,5 Teilen Eisessig versetzt und mit 334 Teilen Wasser verdünnt. Man erhält 582,1 Teile einer Lösung des Umsetzungsproduktsalzes, deren Gehalt, berechnet auf Trockensubstanz, 30% beträgt und welche eine pH-Wert von 4,3 aufweist.

B. 67,3 Teile eines aus dimerisierter Linolsäure und Triäthylentetramin gebildeten Polyäthylenpolyaminoamides (0,3 Aminogruppenäquivalent des Polyaminoamids, das einen Amingehalt von 4,46 Aequivalenten /kg aufweist) werden in 22,4 Teilen Isopropanol gelöst. Die Lösung wird mit 18 Teilen Eisessig versetzt, wobei eine mit Wasser im Verhältnis von 1:5 verdünnte Lösung dieser Polyaminoamidlösung nach der Eisessigzugabe einen pH-Wert von 5,5 aufweist. Anschliessend wird die Lösung auf 70°C geheizt und mit einer Lösung aus 28 Teilen des in Vorschrift A angegebenen Epoxyds (0,15 Epoxygruppenäquivalent)

in 9,5 Teilen Isopropanol versetzt, wobei eine exotherme Reaktion einsetzt. Nach der Epoxydzugabe wird das Reaktionsgemisch während 1 Stunde bei 70°C gehalten und anschliessend mit 331 Teilen Wasser verdünnt. Man erhält 476,2 Teile einer Lösung des Umsetzungsproduktsalzes, deren Gehalt, berechnet auf Trockensubstanz, 20% beträgt.

C. Man verfährt wie in Vorschrift B. angegeben, versetzt jedoch die Polyaminoamidlösung nach der Eisessigzugabe bei 70°C mit einer Lösung aus 14 Teilen des in Vorschrift A. angegebenen Epoxyds (0,075 Epoxygruppenäquivalent) in 5 Teilen Isopropanol, hält das Reaktionsgemisch nach der Epoxydzugabe bei 75°C während 1/2 Stunde und verdünnt es anschliessend mit 280 Teilen Wasser. Man erhält 406,7 Teile einer Lösung des Umsetzungsproduktsalzes, deren Gehalt, berechnet auf Trockensubstanz, 20% beträgt.

D. 37,8 Teile des in Vorschrift A. angegebenen Epoxyds (0,2 Epoxygruppenäquivalent) und 13 Teile Talgfettamin (0,05 Aminogruppenäquivalent eines technischen Gemisches aus 30% Palmitylamin, 30% Stearylamin und 40% Oleylamin,das einen Amingehalt von 3,84 Aequivalenten /kg aufweist) werden in 17 Teilen Isopropanol gelöst, auf 85°C geheizt und 1 Stunde bei dieser Temperatur gehalten. Anschliessend wird das Reaktionsgemisch mit einer Lösung aus 90 Teilen eines aus dimerisierter Linolsäure und Triäthylentetramin gebildeten Polyäthylenpolyaminoamids (0,4 Aminogruppenäquivalent des Polyaminoamides, das einen Amingehalt von 4,44 Aequivalenten/kg aufweist) in 30 Teilen Isopropanol und mit 27 Teilen Eisessig versetzt, wobei eine mit Wasser im Verhältnis von 1:5 verdünnte Probe dieser Polyaminoamidlösung nach der Eisessigzugabe einen pH Wert von 5,5 aufweist.
Nach der Polyaminoamid- und Eisessigzugabe wird das Reaktionsgemisch wiederum auf 95°C geheizt, 1 Stunde bei dieser Temperatur gehalten und anschliessend mit 254 Teilen Wasser verdünnt. Man erhält 468,8 Teile einer Lösung des Umsetzungsproduktsalzes, deren Gehalt, berechnet auf Trockensubstanz, 30% beträgt.

E. 39,84 Teile eines Gemisches aus 27% 1-Amino-dokosan, 27% 1-Aminoeikosan, 36% Stearylamin und 10% Palmitylamin (0,12 Aminogruppenäquivalente des chemischen Gemisches, das einen Amingehalt von 3,01 Aequivalente/kg aufweist) werden in 17 Teilen Aethylenglykolmono-n-butyläther bei 85°C gelöst. In die Fettaminlösung wird eine Lösung aus 45,6 Teilen eines aus 2,2-Bis-(4'-hydroxyphenyl)-propan und Epichlorhydrin gebildeten Epoxyds (0,24 Epoxygruppenäquivalent des Epoxydes, das einen Epoxydgehalt von 5,26 Aequivalente/kg aufweist) in 15,2 Teilen Aethylenglykolmono-n-butyläther zugegeben, wobei eine exotherme Reaktion einsetzt. Das Reaktionsgemisch wird während 1 Stunde bei 90°C gehalten und anschliessend mit einer Lösung aus 27,6 Teilen eines aus dimerisierter Linolsäure und Triäthylentetramin gebildeten Polyäthylenpolyaminoamides (0,12 Aminogruppenäquivalent des Polyaminoamids, das einen Amingehalt von 4,34 Aequivalente/kg aufweist) in 9,2 Teilen Aethylenglykolmono-n-butyläther versetzt. Nach dieser Zugabe wird das Reaktionsgemisch während 2 Stunden bei 90°C gehalten und dann mit einer Lösung versetzt, die 12 Teile einer 35%igen Salzsäure in 210 Teilen Wasser enthält. Man erhält 376,8 Teile einer Lösung des Umsetzungsproduktsalzes, deren Gehalt, berechnet auf Trockensubstanz, 30% beträgt und welche einen pH-Wert von 3,8 aufweist.

<u>Beispiel 1:</u> **120 Teile der 30%igen Lösung des Umsetzungsproduktsalzes gemäss Vorschrift A werden in 81,3 Teilen Wasser verdünnt und mit 27 Teilen Styrol und 9 Teilen Isobutylacrylat vermischt, wobei eine homogene Emulsion entsteht. Nun wird diese Emulsion unter inerter Stickstoffatmosphäre mit 2,7 Teilen einer wässrigen, 35%igen Wasserstoffsuperoxydlösung versetzt, auf 80°C geheizt und 6 Stunden bei dieser Temperatur gehalten. Man erhält 240 Teile einer dünnflüssigen, feinteiligen Emulsion, deren Gehalt, berechnet auf Trockensubstanz, 30% beträgt.**

Beispiel 2: 168 Teile der 30%igen Lösung des Umsetzungsproduktsalzes gemäss Vorschrift A werden mit 48,1 Teilen Wasser verdünnt und mit 16 Teilen Styrol und 5,3 Teilen 2-Aethylhexylacrylat vermischt, wobei eine homogene Emulsion entsteht. Nun wird diese Emulsion unter inerter Stickstoffatmosphäre mit 1,6 Teilen einer wässrigen, 35%igen Wasserstoffsuperoxydlösung versetzt, auf 80°C geheizt und 6 Stunden bei dieser Temperatur gehalten. Man erhält 240 Teile einer dünnflüssigen, feinteiligen Emulsion, deren Gehalt, berechnet auf Trockensubstanz, 30% beträgt.

Beispiel 3: 120 Teile der 30%igen Lösung des Umsetzungsproduktsalzes gemäss Vorschrift A werden mit 81,3 Teilen Wasser verdünnt und mit 27 Teilen Styrol und 9 Teilen 2-Aethylhexylacrylat vermischt, wobei eine homogene Emulsion entsteht. Nun wird diese Emulsion unter inerter Stickstoffatmosphäre mit 2,7 Teilen einer wässrigen, 35%igen Wasserstoffsuperoxydlösung versetzt, auf 80°C geheizt und 6 Stunden bei dieser Temperatur gehalten. Man erhält 240 Teile einer dünnflüssigen, feinteiligen Emulsion, deren Gehalt, berechnet auf Trockensubstanz, 30% beträgt.

Beispiel 4: 116,5 Teile der 30%igen Lösung des Umsetzungsproduktsalzes gemäss Vorschrift A werden mit 160 Teilen Wasser verdünnt und mit 52,5 Teilen Styrol und 17,5 Teilen 2-Aethylhexylacrylat vermischt, wobei eine homogene Emulsion entsteht. Nun wird diese Emulsion unter inerter Stickstoffatmosphäre mit 3,5 Teilen einer wässrigen, 35%igen Wasserstoffsuperoxydlösung versetzt, auf 80°C geheizt und 8 Stunden bei dieser Temperatur gehalten. Man erhält 350 Teile einer dünnflüssigen, feinteiligen Emulsion, deren Gehalt, berechnet auf Trockensubstanz, 30% beträgt.

<u>Beispiel 5:</u> 116,5 Teile der 20%igen Lösung des Umsetzungsproduktsalzes gemäss Vorschrift B werden mit 184,5 Teilen Wasser verdünnt und mit 35 Teilen Styrol und 11,7 Teilen 2-Aethylhexylacrylat vermischt, wobei eine homogene Emulsion entsteht. Nun wird diese Emulsion unter inerter Stickstoffatmosphäre mit 2,3 Teilen einer wässrigen, 35%igen Wasserstoffsuperoxydlösung versetzt, auf 80°C geheizt und 8 Stunden bei dieser Temperatur gehalten. Man erhält 350 Teile einer dünnflüssigen, feinteiligen Emulsion, deren Gehalt, berechnet auf Trockensubstanz, 20% beträgt.

<u>Beispiel 6:</u> 116,5 Teile der 20%igen Lösung des Umsetzungsproduktsalzes gemäss Vorschrift C werden mit 184,5 Teilen Wasser verdünnt und mit 35 Teilen Styrol und 11,7 Teilen 2-Aethylhexylacrylat vermischt, wobei eine homogene Emulsion entsteht. Nun wird diese Emulsion unter inerter Stickstoffatomosphäre mit 2,3 Teilen einer wässrigen, 35%igen Wasserstoffsuperoxydlösung versetzt, auf 80°C geheizt und 8 Stunden bei dieser Temperatur gehalten. Man erhält 350 Teile einer dünnflüssigen, feinteiligen Emulsion, deren Gehalt, berechnet auf Trockensubstanz, 20% beträgt.

<u>Beispiel 7:</u> 83,3 Teile der 30%igen Lösung des Umsetzungsproduktsalzes gemäss Vorschrift D werden mit 112 Teilen Wasser verdünnt und mit 37,5 Teilen Styrol und 12,5 Teilen 2-Aethylhexylacrylat vermischt, wobei eine homogene Emulsion entsteht. Nun wird diese Emulsion unter inerter Stickstoffatmosphäre mit 4,7 Teilen einer wässrigen, 80%igen tert.Butylhydroperoxydlösung versetzt, auf 80°C geheizt und 6 Stunden bei dieser Temperatur gehalten. Man erhält 250 Teile einer dünnflüssigen, feinteiligen Emulsion, deren Gehalt, berechnet auf Trockensubstanz, 30% beträgt.

Beispiel 8: 86,6 Teile der 30%igen Lösung des Umsetzungsproduktsalzes gemäss Vorschrift A werden mit 117,4 Teilen Wasser verdünnt und mit 21 Teilen Acrylnitril und 31 Teilen 2-Aethylhexylacrylat vermischt, wobei eine homogene Emulsion entsteht. Nun wird diese Emulsion unter inerter Stickstoffatmosphäre mit 4 Teilen einer wässrigen, 35%igen Wasserstoffsuperoxydlösung versetzt, auf 80°C geheizt und 6 Stunden bei dieser Temperatur gehalten. Man erhält 260 Teile einer dünnflüssigen, feinteiligen Emulsion, deren Gehalt, berechnet auf Trockensubstanz, 30% beträgt.

Beispiel 9: 65 Teile der 30%igen Lösung des Umsetzungsproduktsalzes gemäss Vorschrift A werden mit 133,6 Teilen Wasser verdünnt und mit 58,5 Teilen Styrol vermischt, wobei eine homogene Emulsion entsteht. Nun wird diese Emulsion unter inerter Stickstoffatmosphäre mit 2,9 Teilen einer wässrigen, 35%igen Wasserstoffsuperoxydlösung versetzt, auf 80°C geheizt und 6 Stunden bei dieser Temperatur gehalten. Man erhält 260 Teile einer dünnflüssigen, feinteiligen Emulsion, deren Gehalt, berechnet auf Trockensubstanz, 30% beträgt.

Beispiel 10: 133,3 Teile der 30%igen Lösung des Umsetzungsproduktsalzes gemäss Vorschrift E werden mit 23 Teilen Wasser verdünnt und mit 6,45 Teilen n-Butylacrylat und 3,55 Teilen Acrylnitril vermischt, wobei eine homogene Emulsion entsteht. Nun wird diese Emulsion unter inerter Stickstoffatmosphäre mit 0,75 Teilen einer wässrigen, 35%igen Wasserstoffsuperoxydlösung versetzt, auf 80°C geheizt und 6 Stunden bei dieser Temperatur gehalten. Man erhält 167 Teile einer dünnflüssigen, feinteiligen Emulsion, deren Gehalt, berechnet auf Trockensubstanz, 30% beträgt.

Beispiel 11: Ein Filterpapier aus reiner Cellulose mit einem Flächengewicht von 110g/$m^2$ wird mit einer Geschwindigkeit von 4 m/Min. und einem Anpressdruck von 10 kg/$cm^2$ mit einer wässrigen Flotte foulardiert, welche die in der nachfolgenden Tabelle I angegebenen Mengen an Emulsionen gemäss einem der Beispiele 1 bis 7 enthalten. Das foulardierte Papier wird während 10 Minuten bei 90°C getrocknet. Die erzielte Oberflächenleimung des behandelten Papiers wird aufgrund des Wasseraufnahmetests nach Cobb bei 30 Sekunden Einwirkungsdauer (WA $Cobb_{30}$) gemäss DIN 53 132 geprüft. Je tiefer die Wasseraufnahme im WA $Cobb_{30}$ Test ist, desto besser ist die Oberflächenleimung des behandelten Papiers. Die Ergebnisse des WA $Cobb_{30}$ Tests sind in der nachfolgenden Tabelle I ebenfalls angegeben.

Tabelle I

| Emulsion gemäss Beispiel | Gehalt * der Emulsion | Gehalt * der Foulardierflotte** | Auftrag * mg/$m^2$ | Ergebnis des WA $Cobb_{30}$ Tests g/$m^2$ |
|---|---|---|---|---|
| 1 | 30 | 0,1 | 100 | 19 |
| 2 | 30 | 0,1 | 100 | 17 |
| 3 | 30 | 0,1 | 100 | 15 |
| 4 | 30 | 0,1 | 100 | 20 |
| 5 | 20 | 0,1 | 100 | 18 |
| 6 | 20 | 0,1 | 100 | 18 |
| 7 | 30 | 0,1 | 100 | 30 |
| unbehandeltes Papier | | | | 188 |

* berechnet auf Trockensubstanz.

** erhalten durch Verdünnung der 20 bzw. 30%igen Emulsionen gemäss einem der Beispiele 1 bis 9 mit der entsprechenden Menge Wasser.

Aehnliche Ergebnisse werden beim Foulardieren des Filterpapiers mit Flotten erzielt, die Emulsionen gemäss einem der Beispiele 8, 9 oder 10 enthalten.

Beispiel 12: Ein Polyester/Viscose (PES/CV) Mischgewebe 67/33 und ein Polyacrylnitril (PAC) Gewirke werden jeweils mit einer wässrigen Flotte foulardiert, die 2% der 30%igen Emulsion gemäss Beispiel 8 enthält, bei 80°C während 30 Minuten getrocknet und nach dem Thermofixierverfahren einer Wärmebehandlung bei 140°C während 1 Minute unterworfen. Ein Teil der Gewebe bzw. Gewirke werden dann je 5 mal in einer Haushaltwaschmaschine während 45 Minuten bei 60°C in einer wässrigen Flotte gewaschen, die 4 g/l eines handelsüblichen Haushaltswaschmittels enthält (SNV 198 861). Vor und nach diesen 5 Waschoperationen werden die einzelnen, erfindungsgemäss ausgerüsteten, im Vergleich mit unbehandelten Geweben bzw. Gewirken auf ihre Antipillingeffekte nach der folgenden Methode geprüft:
Die Textilprüflinge (10 x 13 cm) werden um Gummischläuche von 4 cm Länge, 5 mm Wandstärke und 3 1/2 cm Aussendurchmesser genäht. Zwei der so vorbereiteten Proben werden zusammen mit zwei Gummirollen in jede der kunststoffverkleideten Kammern (12 X 12 X 12 cm) des Pilling-Prüfapparates Nr. 59 der Firma Zweigle KG, Reutlingen, BRD, gelegt. Beim Umlaufen des Behälters (65 U/Min. ) bewegen sich die Stoffproben in den Prüfkammern frei und werden sowohl an den Wänden als auch durch die Gummirollen gerieben. Die Versuchsdauer beträgt 8 Stunden, wobei stündlich die Proben mit Standard-Photos der EMPA (Eidgenössische Material- und Prüfanstalt Zürich) verglichen und mit Noten von 1 bis 5 bewertet werden. Hierbei werden nur die Pillinge erfasst, welche am Gewebe haften bleiben. Als Resultat wird der Durchschnitt der 8 Messungen nach jeder Stunde angegeben. Dabei bedeutet die schlechteste Note 1 sehr starke Noppenbildung und die beste Note 5 keine oder nur schwache Noppenbildung. Die Ergebnisse dieser Pillingprüfung sind als Noten in der nachfolgenden Tabelle II zusammengestellt:

Tabelle II

| | PES/CP 67/33 | | PAC | |
|---|---|---|---|---|
| | behandelt | unbehandelt | behandelt | unbehandelt |
| Antipilling-Noten | | | | |
| - vor den 5 Haushaltswasch-operationen | 2,8 | 2,3 | 3,3 | 2,6 |
| - nach den 5 Haushaltswasch-operationen | 2,5 | 2,1 | 3,3 | 2,4 |

Aehnliche Ergebnisse, d.h. permanente gute Antipillingeffekte, die auch nach mehrfachen Gebrauchswäschen im Haushalt weitgehend erhalten bleiben, werden durch eine Behandlung der Textilmaterialien mit den Emulsionen gemäss einem der Beispiele 1 bis 7, 9 oder 10 im Vergleich mit unbehandelten Textilmaterialien erzielt.

Beispiel 13: Ein Polyestergewebe wird mit einer wässrigen Flotte foulardiert, die 0,5% der 30%igen Emulsion gemäss Beispiel 9 enthält, bei 80°C während 30 Minuten getrocknet und nach dem Thermofixierverfahren einer Wärmebehandlung bei 180°C während 1 Minute unterworfen. Das so behandelte Gewebe wird im Vergleich mit unbehandelten Geweben auf ihre Antisnaggingeffekte mit einem "Mace-Snag-Tester" genannten Gerät (Morgenstern-Zieherbildung-Prüfgerät) der ICI geprüft. Einzelheiten über das Prüfgerät und die Messmethoden sind z.B. in Melliand Textilberichte Bd. 54, S. 942-945 (9/1973) und in American Dyestuff Reporter Bd. 61, S. 27-30 (7/1972) beschrieben. Die Testresultate werden als Bewertungsnoten ausgedrückt, wobei 5 der besten (kein Snagging) und 1 der schlechtesten (starkes Snagging) Note entsprechen. Für Damenoberbekleidung gilt die Note 3-4 als zufriedenstellend.

Das erfindungsgemäss behandelte Polyestergewebe weist die Note 4-5 im Antisnaggingtest auf, während dem unbehandelten Gewebe die Note 3 zukommt. Aehnliche Ergebnisse werden bei der Behandlung des Polyestergewebes mit den Emulsionen gemäss einem der Beispiele 1 bis 8 oder 10 erzielt.

Beispiel 14: Ein Polyacrylnitrilgewirke wird mit einer wässrigen Flotte foulardiert, die 1% der 30%igen Emulsion gemäss Beispiel 2 enthält und wie in Beispiel 11 angegeben getrocknet und thermofixiert. Proben (10 X 5 cm) des so behandelten Gewirkes und des unbehandelten Gewirkes werden nun in einen Behälter von 2 L Inhalt gelegt und in Gegenwart von Luftfilterstaub (20% bezogen auf Gewirkegewicht) während 30 Minuten im Schüttelapparat der Fa. Bachofen, Basel, bei 15 U/min. geschüttelt. Anschliessend wird der lose Staub abgeschüttelt und dann mit einem haushaltsüblichen Staubsauger abgesaugt. Der Trockenanschmutzungsgrad der Prüflinge wird hierauf mit Hilfe des Graumasstabs zur Anschmutzungsbeurteilung (Grey scale for assessing staining) gemäss BS (British Standard) 2663 (1961) bewertet. Beim Graumasstab handelt es sich um zehn Flächen mit Grau-Weiss-Färbungen, die paarweise geordnet sind, und 5 Kontrastgrade in geometrischer Reihe aufweisen. Der Graumasstab ist bei der Firma WIRA in Leeds (England) erhältlich. Bei Zuordnung der Note 5 für den Typ (im vorliegenden Fall für das unbehandelte und angeschmutzte Gewirke) werden den Prüflingen, die stärker als Typ angeschmutzt sind, tiefere Noten als 5, z.B. 0-1 bis 4-5, und den Prüflingen, die schwächer als Typ angeschmutzt sind, höhere Noten als 5, z.B. 5-6 bis 9-10 zugeschrieben.

Bei Zuordnung der Note 5 dem unbehandelten und angeschmutzten Polyacrylnitrilgewirke weist das erfindungsgemäss behandelte Polyacrylnitrilgewirke eine Trockenanschmutzungsnote von 6-7 auf.

Aehnliche Ergebnisse werden bei Behandlung des Gewirkes mit den Emulsionen gemäss einem der Beispiele 1 oder 3 bis 10 erzielt.

Patentansprüche:

1. Komponentengemisch, dadurch gekennzeichnet, dass es als Komponente

(A) mindestens ein in Wasser dispergierbares oder lösliches Salz eines Umsetzungsproduktes, wobei dieses Salz durch Umsetzung von

(a) 1,0 Epoxygruppenäquivalent eines Diglycidyläthers des 2,2-Bis(4'-hydroxyphenyl)-propans,

(b) 0,2 bis 5,0 Aminogruppenäquivalenten eines Polyalkylenpolyaminoamides aus

(b') einer polymerisierten, ungesättigten Fettsäure, die sich von Fettsäuren mit 12 bis 24 Kohlenstoffatomen ableitet, und

(b") einem aliphatischen Polyalkylenpolyamin mit 4 bis 12 Kohlenstoffatomen,

(c) 0 bis 0,6 Aminogruppenäquivalent mindestens eines primären Fettamines mit 12 bis 24 Kohlenstoffatomen,

wobei bei Abwesenheit der Komponente (c) 1,0 bis 5,0 Aminogruppenäquivalent der Komponente (b) und beim Einsatz der Komponente (c) 0,5 bis 2,0 Aminogruppenäquivalente der Komponente (b) eingesetzt werden,

und

(d) 0 bis 1,0 Mol eines Epihalogenhydrins, in Gegenwart eines inerten, organischen Lösungsmittels bei Temperaturen bis zu 110°C erhältlich ist und wobei dafür gesorgt wird, dass durch einen

Säurezusatz spätestens nach Beendigung der Umsetzungen eine mit Wasser auf 10 bis 40 Gewichtsprozent verdünnte Probe des Reaktionsgemisches unter Salzbildung einen pH-Wert von 2 bis 8 aufweist,

und als Komponente

(B) ein Homopolymerisat aus Styrol oder ein Copolymerisat aus Styrol oder Acrylnitril und einem Alkylester der Acryl- oder Methacrylsäure mit 4 bis 12 Kohlenstoffatomen im Alkylrest

enthält.

2. Gemisch nach Anspruch 1, dadurch gekennzeichnet, dass es als Komponente (A) ein Salz eines Umsetzungsproduktes enthält, welches aus 1,0 Epoxydgruppenäquivalent der Komponente (a) und 1,5 bis 5,0 Aminogruppenäquivalenten der Komponenten (b) erhältlich ist.

3. Gemisch nach Anspruch 1, dadurch gekennzeichnet, dass es als Komponente (A) ein Salz eines Umsetzungsproduktes enthält, welches aus 1,0 Epoxydgruppenäquivalent der Komponente (a), 0,5 bis 2,0 Aminogruppenäquivalenten der Komponente (b) und 0,2 bis 0,5 Aminogruppenäquivalenten der Komponente (c) erhältlich ist.

4. Gemisch nach Anspruch 1, dadurch gekennzeichnet, dass es als Komponente (A) ein Salz eines Umsetzungsproduktes enthält, welches aus 0,1 bis 0,5 Mol der zusätzlichen Komponente (d) pro Epoxydgruppenäquivalent der Komponente (a) erhältlich ist.

5. Gemisch nach Anspruch 1, dadurch gekennzeichnet, dass es als Komponente (A) ein Salz eines Umsetzungsproduktes enthält, welches unter Zusatz von Essigsäure erhältlich ist, wobei eine mit Wasser verdünnte Probe des Umsetzungsproduktsalzes einen pH-Wert von 4 bis 6 aufweist.

6. Gemisch nach Anspruch 1, dadurch gekennzeichnet, dass es als Komponente (B) ein Homo- oder Copolymerisat enthält, welches in Gegenwart von Wasser, der Komponente (A) und eines Polymerisationskatalysators bei Temperaturen bis zu 95°C erhältlich ist.

7. Gemisch nach Anspruch 6, dadurch gekennzeichnet, dass es als Komponente (B) ein Copolymerisat aus Styrol oder Acrylnitril und einem Alkylester der Acryl- oder Methacrylsäure mit 4 bis 12 Kohlenstoffatomen im Alkylrest enthält, welches ein Gewichtsverhältnis Styrol oder Acrylnitril: Alkylester der angegebenen Art von 1:0,1 bis 1:2,0 aufweist.

8. Gemisch nach Anspruch 1, dadurch gekennzeichnet, dass es 25 bis 80 Gewichtsprozent der Komponente (A) und 20 bis 75 Gewichtsprozent der Komponente (B) enthält, wobei die Summe der Komponenten (A) und (B) 100 Gewichtsprozent beträgt.

9. Verfahren zur Herstellung des Komponentengemisches gemäss einem der Ansprüche 1 bis 8, dadurch gekennzeichnet, dass man

1,0 Epoxygruppenäquivalent eines Diglycidyläthers des 2,2-Bis(4'-hydroxyphenyl)-propans als Komponente (a),

0,2 bis 5,0 Aminogruppenäquivalenten eines Polyalkylenpolyaminoamides aus

(b') einer polymerisierten, ungesättigten Fettsäure, die sich von Fettsäuren mit 12 bis 24 Kohlenstoffatomen ableitet, und

(b") einem aliphatischen Polyalkylenpolyamin mit 4 bis 12 Kohlenstoffatomen als Komponente (b),

0 bis 0,6 Aminogruppenäquivalent mindestens eines primären Fettamines mit 12 bis 24 Kohlenstoffatomen als Komponente (c)

wobei bei Abwesenheit der Komponente (c) 1,0 bis 5,0 Aminogruppenäquivalent der Komponente (b) und beim Einsatz der Komponente (c) 0,5 bis 2,0 Aminogruppenäquivalente der Komponente (b) eingesetzt werden,

und

0 bis 1,0 Mol eines Epihalogenhydrins als Komponente (d),

in beliebiger Reihenfolge in Gegenwart eines inerten, organischen Lösungsmittels bei Temperaturen bis zu 110°C zur Komponente (A) umsetzt und dafür sorgt, dass durch einen Säurezusatz spätestens nach Beendigung der Umsetzungen, eine mit Wasser auf 10 bis 40 Gewichtsprozent verdünnte Probe des Reaktionsgemisches unter Salzbildung einen pH-Wert von 2 bis 8 aufweist, das Reaktionsgemisch mit Wasser verdünnt und im verdünnten Gemisch Styrol oder ein Gemisch aus einem Alkylester der Acryl- oder Methacrylsäure mit 4 bis 12 Kohlenstoffatomen im Alkylrest und Styrol oder Acrylnitril in Gegenwart eines Polymerisationskatalysators bei der angegebenen Temperatur zur Komponente (B) polymerisiert.

10. Verwendung des Komponentengemisches gemäss einem der Ansprüche 1 bis 8 als Papierleimungsmittel oder als Textilbehandlungsmittel.

Europäisches Patentamt

# EUROPÄISCHER RECHERCHENBERICHT

0038295
Nummer der Anmeldung

EP 81 81 0114

| EINSCHLÄGIGE DOKUMENTE | | | KLASSIFIKATION DER ANMELDUNG (Int Cl.) |
|---|---|---|---|
| Kategorie | Kennzeichnung des Dokuments mit Angabe, soweit erforderlich, der maßgeblichen Teile | betrifft Anspruch | |
| A | US - A - 4 109 053 (PAUL HARWOOD ALDRICH)<br>* Ansprüche *<br>-- | 1 | C 08 L 63/00<br>D 06 M 15/00<br>D 21 H 3/36<br>C 08 L 25/06<br>25/14<br>33/20 |
| A | US - A - 3 941 736 (PAUL HARWOOD ALDRICH)<br>* Ansprüche *<br>-- | 1 | |
| A | GB - A - 909 494 (GENERAL MILLS)<br>* Ansprüche *<br>-- | 1 | RECHERCHIERTE SACHGEBIETE (Int. Cl.) |
| A | US - A - 4 171 404 (CLIFFORD C. CARROLL)<br>* Ansprüche *<br>-- | 1 | C 08 L 63/00<br>63/02<br>25/06<br>25/14<br>33/20<br>D 21 H 3/36<br>D 06 M 15/44 |
| A | FR - A - 2 116 765 (PORTER PAINT)<br>* Ansprüche; Seite 4, Zeilen 2-18 *<br>---- | 1 | |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 30-07-1981 | MALHERBE |